# FASCICULE DE BREVET EUROPEEN

(11) **EP 0 360 632 B1**
(45) Date de publication et mention de la délivrance du brevet: **27.10.1993**
(21) Numéro de dépôt: 89402110.4
(22) Date de dépôt: 25.07.1989
(51) Int. Cl.: F16L 41/08

(54) **Procédé pour le raccordement rapide, étanche de tubes**
Verfahren zum schnellen und dichten Verbinden von Rohren
Method for the guide and leak-proof connection of pipes

(30) Priorité: 09.08.1988 FR 8810744
(43) Date de publication de la demande: 28.03.1990
(73) Titulaire: "DEGREMONT" Société dite:, F-92508 Rueil-Malmaison Cédex (FR)
(72) Inventeur: Fond, Olivier, F-78230 Le Pecq (FR); Brunet, Jean-Louis, F-78450 Chavenay (FR)
(74) Mandataire: Armengaud Ainé, Alain

(56) Documents cités:
- CH-A- 373 606
- GB-A- 1 313 069
- US-A- 4 606 562

## Description

La présente invention concerne un procédé destiné à assurer le raccordement rapide et étanche de deux tubes, ce procédé étant particulièrement utilisable pour réaliser, dans un réseau de distribution de fluides comportant une pluralité de ramifications tubulaires alimentées par un collecteur, le branchement des ramifications sur le collecteur.

L'invention met en oeuvre un dispositif qui est du type décrit dans CH-A-373-606 comportant une pièce, de préférence en plastique moulée, présentant un système d'accrochage constitué par une pluralité de dents, introduites dans un orifice calibré pratiqué dans le collecteur, auquel fait suite un logement pour une bague destinée à réaliser l'étanchéité du raccordement, cette pièce comportant un filetage en vue de son vissage sur un écrou assurant son maintien sur le tube qu'il s'agit de brancher, avec interposition d'un joint torique, comprimé entre l'écrou et la tranche arrière du dispositif.

En utilisant un tel dispositif l'invention apporte un procédé caractérisé en ce que le blocage du tube sur son collecteur est obtenu par l'accrochage des dents radialement déplaçables, sur le collecteur par lequel sont alimentées les ramifications tubulaires, lors de l'introduction de la pièce de fixation dans l'orifice du collecteur suivi d'une rotation de cette dernière puis de l'introduction de ladite ramification tubulaire dans ladite pièce de fixation jusqu'à l'extrémité des dents.

Les divers caractéristiques et avantages de l'invention ressortiront de la description qui va suivre d'une de ces formes possible de mise en oeuvre donnée uniquement à titre d'exemple non limitatif.

Au cours de cette description aux dessins ci-joints qui montrent :
- figure 1 en coupe le raccordement d'une ramification sur un collecteur au moyen du procedé suivant l'invention.
- figure 2 en coupe, la pièce de raccordement du dispositif utilisé dans le procedé
- figure 3, en perspective, le dispositif mis en oeuvre par l'invention en prise dans l'orifice pratiqué dans le collecteur.
- figure 4, également en coupe, la répartition des dents de la pièce de raccordement du dispositif.

L'exemple se rapporte à un réseau de distribution d'un gaz dans une masse liquide, tel que de l'oxygène, ou de l'air éventuellement enrichi en oxygène, amené à un appareil de traitement d'eau par un procédé aérobie. Un tel réseau est constitué de ramifications tubulaires A muni de perforations branchées sur un collecteur B. Il s'agit de raccorder, commodément, c'est-à-dire sans en avoir recours à un outillage, rapidement, et de façon étanche, les ramifications sur le collecteur.

Ce but est atteint par le procedé suivant l'invention, qui met en oeuvre le dispositif decrit ci-après.

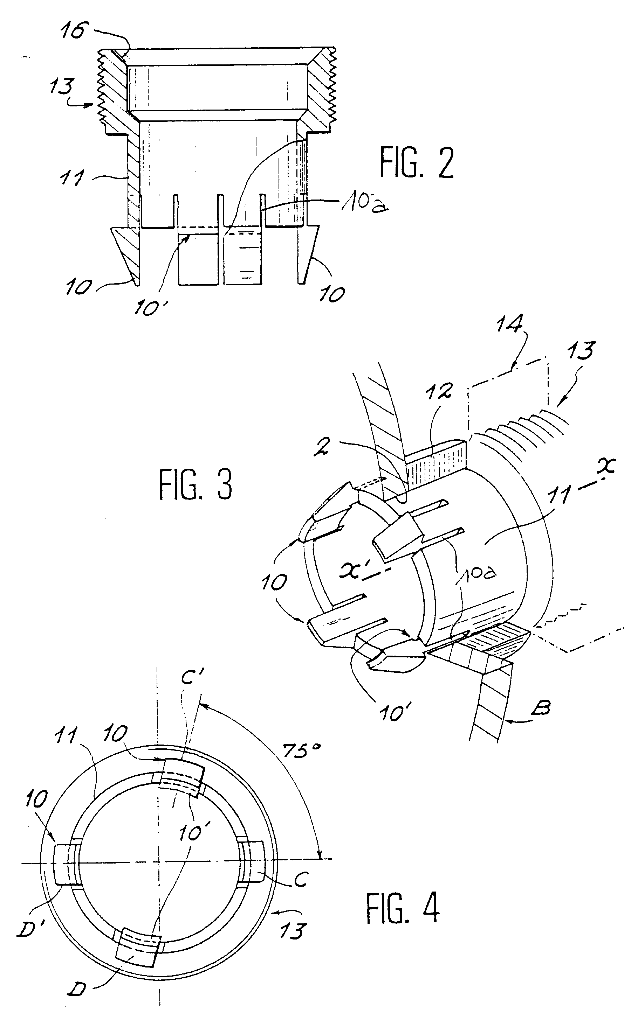

Ce dispositif comprend une pièce 1 de fixation que l'on voit en détail sur la fig. 2. Cette pièce, avantageusement en une matière plastique moulée, présente successivement en partant de l'extrémité par laquelle elle est introduite dans l'orifice 2 pratiqué dans le collecteur B, une pluralité de dents 10, un logement 11 pour une bague d'étanchéité 12 en une matière compressible déformable et un épaulement 13 fileté sur lequel vient se visser un écrou 14, avec interposition d'un joint d'étanchéité torique 15 comprimé entre la portée conique 16 de la tranche postérieure de la pièce 1 et une bague 17 sur laquelle s'exerce l'effort de l'écrou 14. Les dents prolongent axialement l'extrémité inférieure de la pièce 1 et sont radialement déplaçables grâce à la présence des fentes 10.a délimitant les parois latérales des dents.

En introduisant la pièce de fixation 1 dans l'orifice 2 du collecteur Jusqu'à application et encliquetage des premières dents sur la paroi interne de ce dernier et dans son sens longitudinal, et en conférant à la dite pièce un mouvement de rotation, ce mouvement provoque un mouvement de translation de la pièce, d'où libération des autres dents sur la paroi interne du col lecteur et compression de la bague d'étanchéité 12.

Le tube A est alors introduit dans la pièce de fixation 1 Jusqu'à l'extrémité des dents. Ces dernières s'écartent alors et viennent se bloquer sur la surface interne du collecteur B. La pièce 1 est, dans ces conditions, parfaitement bloquée.

On termine le montage en vissant l'écrou 14 sur la pièce 1, ce qui comprime le Joint torique 15 et assure la fixation du tube A sur le collecteur B.

On réalise ainsi, en définitive, l'ancrage étanche du tube sur son collecteur.

Dans l'exemple décrit et représenté, la pièce de fixation comporte quatre dents.

Ce nombre peut, bien entendu, être plus important, pouvant aller pratiquement de 2 jusqu'à 20.

En outre, les dents sont avantageusement disposées symétriquement par rapport à l'axe du tube à raccorder, pour obtenir à la fois une compression maximale de la pièce d' étanchéité et un positionnement optimal, quant à sa stabilité. Comme le montre la Figure 4, les dents sont réparties symétriquement par groupes ; l'écart angulaire entre les dents extrêmes C-C' et D-D' de chaque groupe est avantageusement de 75°, comme le montre la Figure 4, mais pouvant aller de 60°jusqu'à 90°.

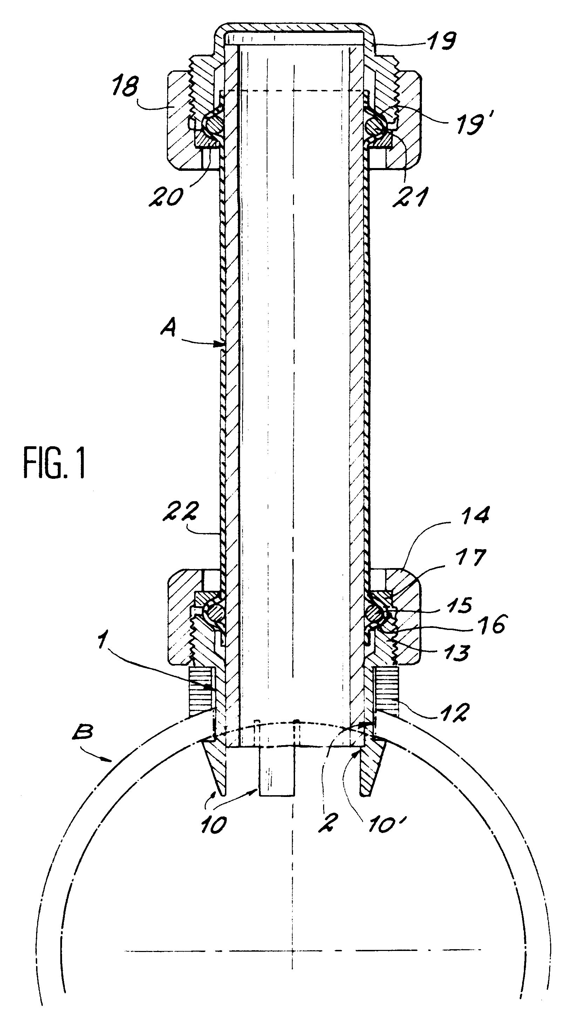

Le dispositif peut être avantageusement complété par une pièce de fermeture 19 (voir Figure 1) enfilée sur l'extrémité libre du tube A, dans laquelle vient se visser un écrou 18, cet ensemble comprimant, avec interposition d'une bague 20 un joint torique 21. La portée interne 19' de la pièce de fermeture est conique de façon à ne pas endommager le joint.

Dans le cas où le tube à raccorder au collecteur est un tube-support pour un manchon perforé en élastomère, ce manchon 22 est enfilé sur le tube, autour du joint 15 et, si la pièce de fermeture existe, également autour du Joint 21. L'extension du manchon, entraînée par le Joint torique assure la compression du Joint sur le tube-support et l'adhésion parfaite du manchon lui-même sur le joint et en conséquence l'étanchéité du système. La qualité de l'étanchéité est donc favorisée par ce Joint torique, lui-même en élastomère, qui offre alors une épaisseur de matière élastique beaucoup plus importante que la simple membrane du manchon, donc plus favorable à la compression (par exemple, rapport d'épaisseur de 1 à 5 à 1 à 20 pour une épaisseur de membrane de 0.5 à 3 mm.

Le procedé suivant l'invention peut également être utilisé pour le raccordement d'un tube de section quelconque sur une paroi quelconque.

Il suffit d'engager la pièce de fixation dans l'orifice ménagé dans le collecteur, ou dans un trou, de forme adéquate, pratiqué dans une pièce plane rapportée et de pousser ensuite la pièce de fixation jusqu'à pénétration complète des dents en nombre impair ou pair à travers l'orifice jusqu'à leur accrochage sur la paroi du collecteur ou sur la pièce rapportée. La bague 12 qui peut, dans ce cas, être plus épaisse et d'une densité adaptée, assure la fixation en force de la pièce de raccordement et l'étanchéité du montage.

On voit, par ce qui précède, que le procedé suivant l'invention permet de résoudre, de façon simple et économique, sans nécessiter l'emploi d'un outillage spécialisé et/ou d'une main-d'oeuvre qualifiée, le problème du raccordement, rapide, étanche de deux tubes, de même section ou de section différente, de Même forme, ou de forme différente, en section.

Il convient d'ajouter que le dispositif peut tout aussi facilement être démonté que monté. Il suffit, en effet, d'agir par un outil quelconque, sur les dents du système de fixation du dispositif pour obtenir sa libération du tube sur lequel il est en prise.

Des encoches, non représentées, pratiquées dans le tube A que l'on vient placer sur les embases 10' prévues sur les dents non engagées, permettent de transmettre à la pièce 1 le mouvement de rotation que l'on imprime au tube A. En fin d'encliquetage des dents, le tube A se trouve introduit jusqu'à l'extrémité des dents, et correctement positionné en rotation. Les dents sont alors bloquées sur la face interne du collecteur B. La pièce 1 est dans ces conditions parfaitement bloquée.

La réalisation des pièces décrites selon l'invention en matière plastique injectée, conduit à une exécution très économique et évite les problèmes dus à la corrosion ou au couple électrique dans le cas de liaison métallique.

## Revendications

1. Procédé pour le raccordement rapide, étanche, de tubes, plus particulièrement pour réaliser, dans un réseau de distribution de fluides comportant une pluralité de ramifications tubulaires (A) alimentées par un collecteur (B), le branchement des ramifications sur le collecteur, à l'aide d'un dispositif comportant une pièce munie d' une pluralité de dents (10), introduites dans un orifice calibré (2) pratiqué dans le collecteur (8), auquel fait suite un logement (11) pour une bague (12) destinée à réaliser l'étanchéité du raccordement, cette pièce comportant un filetage en vue de son vissage sur un écrou (14) assurant son maintien sur le tube qu'il s'agit de raccorder avec interposition d'un joint torique (15), comprimé entre l'écrou et la tranche arrière du dispositif caractérisé en ce que le blocage du tube sur son collecteur est obtenu par l'accrochage des dents (10) radialement déplaçables, sur le collecteur (B) par lequel sont alimentées les ramifications tubulaires (A), lors de l'introduction de la pièce de fixation (1) dans l'orifice (2) du collecteur suivi d une rotation de cette dernière puis de l'introduction de ladite ramification tubulaire (A) dans ladite pièce de fixation (1) jusqu'à l'extrémité des dents.

2. Procédé selon la revendication 1 caractérisé en ce que, pour assurer la rotation nécessaire à l'encliquetage des dents sur le collecteur est obtenue par le fait que certaines dents présentent des embases (10') coopérant avec des encoches pratiquées dans le tube (A) à raccorder.

3. Procédé suivant la revendication 1 caractérisé en ce que les dents (10) de la pièce (1) sont en nombre quelconque avantageusement compris entre 2 et 20, et, dans le cas de la fixation d'un tube de section circulaire sur un collecteur de section également circulaire, disposées symétriquement par rapport à l'axe du tube à raccorder.

4. Procédé suivant la revendication 1 caractérisé en ce que la pièce de fixation (1) est aménagée en pièce d'obturation de la ramification à raccorder, par suppression des dents et de la bague d'étanchéité et addition d'un écrou borgne venant se visser dans la pièce, en comprimant un joint torique destiné à assurer l'étanchéité de l'obturation.

5. Procédé suivant l'une quelconque des revendications précédentes, caractérisé en ce que dans le cas où la ramification consiste en un tube-support pour un manchon en élastomère, le manchon est enfilé sur les joints toriques des pièces de fixation et d'obturation, ces joints provoquant l'extension du manchon assurant la compression des joints sur le tube et l'application du manchon sur les joints, déterminant ainsi une étanchéité renforcée de l'ensemble.

## Claims

1. Method for the rapid and leak-proof connection of pipes, more especially for carrying out, in a distribution network for fluids comprising a plurality of pipe branches (A) supplied by a header (B), the connection of the branches to the header, by means of a device comprising a component equipped with a plurality of teeth (10) introduced into a calibrated orifice (2) formed in the header (B), which is followed by a seating (11) for a ring (12) intended for creating the leak-tightness of the connection, this component possessing a threaded zone to enable it to be screwed onto a nut (14) assuring that it is held onto the pipe which is to be connected with the inter-position of a toric seal (15), compressed between the nut and the rear face of the device, characterized in that the blocking of the pipe on its header is achieved by the hooking engagement of the radially displaceable teeth (10) onto the header (B) by which the pipe branches (A) are supplied, during the introduction of the fixing component (1) into the orifice (2) of the header, followed by a rotation of this fixing component and then the introduction of said pipe branch (A) into said fixing component (1) as far as the end of the teeth.

2. Method according to Claim 1, characterized in that the rotation necessary for engagement of the teeth onto the header is obtained by the fact that some teeth have shoulders (10') cooperating with notches formed in the pipe (A) to be connected.

3. Method according to Claim 1, characterized in that the teeth (10) of the component (1) are of any number, advantageously from 2 to 20 in number, and in the case where a pipe of circular section is to be fixed to a header also of circular section, are disposed symmetrically about the axis of the pipe to be connected.

4. Method according to Claim 1, characterized in that the fixing component (1) is formed as an obturation piece for the branch to be connected by eliminating the teeth of the sealing ring and by the addition of a blind nut screwed onto the component while compressing a toric seal intended for assuring the sealing of the obturation.

5. Method according to any one of the preceding Claims, characterized in that, in the case where the pipe branch consists of a support pipe for a sleeve of elastomer, the sleeve is threaded over the toric seals of the fixing and obturation components, these seals causing the extension of the sleeve assuring compression of the seals onto the pipe and application of the sleeve onto the seals, thus creating an improved leak-tightness of the whole assembly.

## Patentansprüche

1. Verfahren zum schnellen und dichten Verbinden von Rohren, insbesondere in einem Verteilungsnetz für Fluide mit einer Vielzahl von rohrförmigen Verzweigungen (A), die von einem Sammelrohr gespeist werden, zur Herstellung des Anschlusses der Verzweigung an das Sammelrohr, mit einer Vorrichtung, die ein Element mit einer Vielzahl von Zähnen (10) aufweist, die in eine kalibrierte Öffnung (2), die im Sammelrohr (8) ausgebildet ist, eingesteckt werden, gefolgt von einer Aufnahme (11) für einen Ring (12) zur Herstellung der Dichtigkeit der Verbindung, wobei das Element ein Aussengewinde zum Eingriff mit einer Mutter (14) aufweist, die die Befestigung auf dem anzuschliessenden Rohr unter Zwischenlage einer ringförmigen Dichtung (15), die zwischen der Schraube und dem hinteren Rand der Vorrichtung komprimiert wird, sicherstellt,
dadurch **gekennzeichnet,**
daß die Verriegelung des Rohrs auf dem Sammelrohr durch die Verrastung der radial verformbaren Zähne (10) am Sammelrohr (B) , durch das die rohrförmigen Verzweigungen (A) gespeist werden, erreicht wird, wenn das Befestigungselement (1) in die Öffnung (2) des Sammelrohrs eingesteckt wird, gefolgt von einer Drehung des Befestigungselements nach der Einführung der rohrförmigen Verzweigung (A) in das Befestigungselement (1) bis zum Ende der Zähne.

2. Verfahren nach Anspruch 1,
dadurch **gekennzeichnet,**
daß die für die Einrastung der Zähne am Sammelrohr notwendige Drehung dadurch erreicht wird, daß bestimmte Zähne Absätze (10') aufweisen, die mit Kerben im anzuschließenden Rohr (A) zusammenwirken.

3. Vefahren nach Anspruch 1,
dadurch **gekennzeichnet,**
daß die Zahl der Zähne (10) des Elements (1) vorzugsweise im Bereich zwischen 2 und 20 liegt und daß die Zähne im Fall der Befestigung eines Rohrs mit kreisförmigem Querschnitt am Sammelrohr mit ebenfalls kreisförmigem Querschnitt symmetrisch bezüglich der Achse des zu anzuschließnden Rohrs angeordnet sind.

4. Verfahren nach Anspruch 1,
dadurch **gekennzeichnet,**
daß das Befestigungselement (1) als Verschlußelement für die anzuschließenden Verzweigung ausgebildet ist, wobei die Zähne und der Dichtungsring weggelassen werden und eine Hutmutter hinzugefügt wird, die auf das Element aufschraubbar ist und dabei eine ringförmige Dichtung zur Abdichtung des Verschlusses komprimiert.

5. Verfahren nach einem der vorstehenden Ansprüche,
dadurch **gekennzeichnet,**
daß, falls die Verzweigung aus einem Stützrohr für eine Manschette aus einem Elastomermaterial besteht, diese Manschette über die ringförmigen Dichtungen der Befestigungselemente und der Verschlußelemente aufgesteckt wird, wobei diese Dichtungen die Ausdehnung der Manschette bewirken, wodurch die Verpressung der Dichtungen auf dem Rohr und die Einwirkung der Manschette auf die Dichtungen sichergestellt wird, so daß eine verstärkte Dichtwirkung der gesamten Vorrichtung erfolgt.
